# EUROPEAN PATENT SPECIFICATION

(11) **EP 4 566 292 B1**
(45) Date of publication and mention of the grant of the patent: **07.10.2026**
(21) Application number: 22954135.4
(22) Date of filing: 05.08.2022
(51) Int. Cl.: H04W 4/24, H04L 12/14, H04M 15/00, H04W 76/18

(54) **CHARGING CONTROL OF SSC MODE**
VERRECHNUNGSKONTROLLE DES SSC-MODUS
CONTRÔLE DE CHARGE DE MODE SSC

(43) Date of publication of application: 11.06.2025
(73) Proprietor: Telefonaktiebolaget LM Ericsson (publ), 164 83 Stockholm (SE)
(72) Inventor: TÖRNKVIST, Robert, 371 54 Karlskrona (SE); LINDBORG OLSSON, Lars, 371 92 KARLSKRONA (SE)
(74) Representative: Ericsson
(86) International application number: PCT/SE2022/050740
(87) International publication number: WO 2024/030052

(56) References cited:
- EP-A1- 3 598 812
- EP-A1- 3 737 197
- EP-A1- 3 737 197
- EP-A1- 3 751 899
- EP-A1- 3 920 610
- KR-A- 20210 144 491
- "3rd Generation Partnership Project; Technical Specification Group Services and System Aspects; Telecommunication management; Charging management; 5G Data connectivity domain charging; stage 2 (Release 15)", 15 April 2018 (2018-04-15), XP051425047, Retrieved from the Internet <URL:http://www.3gpp.org/ftp/Email%5FDiscussions/SA5/> [retrieved on 20180415]
- 3GPP TS 32.255, July 2022 (2022-07-01)

## Description

### TECHNICAL FIELD

Disclosed are embodiments related to charging control of SSC mode.

### BACKGROUND

There are three ways described in the 3rd Generation Partnership Project (3GPP) for 5th generation wireless (5G) on how to ensure session and service continuity. This is disclosed in Technical Specification (TS) 23.501 ("System architecture for the 5G System (5GS); Stage 2").

The support for session and service continuity (SSC) in 5G System architecture enables to address the various continuity requirements of different applications and services for the user equipment (UE). The 5G System supports different SSC modes, such as those defined in TS 23.501. The SSC mode associated with a protocol data unit (PDU) Session does not change during the lifetime of a PDU Session. The following three modes are specified:

SSC mode 1: the user plane function (UPF) acting as PDU Session Anchor at the establishment of the PDU Session is maintained regardless of the access technology (e.g., Access Type and cells) a UE is using to access the network. In this case the PDU Session and Internet Protocol (IP) address(es) is preserved.

SSC mode 2: has a single PDU Session Anchor, the network may trigger the release of the PDU Session and instruct the UE to establish a new PDU Session to the same data network immediately. In this case the network may release the connectivity service delivered to the UE and release the corresponding PDU Session(s). In this case of the PDU Session and the IP address(es) is released.

SSC mode 3: the network allows the establishment of UE connectivity via a new PDU Session Anchor to the same data network before connectivity between the UE and the previous PDU Session Anchor is released. In this case the PDU Session and IP address(es) is released.

The SSC modes may also be described as "no break" (for SSC mode 1), "break before make" (for SSC mode 2), and "make before break" (for SSC mode 3). This means that in SSC mode 1, there is never any changes for the UE; in SSC mode 2, the UE is disconnected by the network and will have to reconnect; and in SSC mode 3, the UE will have to make an extra connection before it terminates the first connection.

The selection mechanism is described in TS 23.501 ("Charging management; 5G data connectivity domain charging; Stage 2"), clause 5.6.9.3. The patent EP3737197 A1 discloses a SMF sending a charging data request to the CHF with a requested SSC mode.

### SUMMARY

The charging in the case of SSC mode 1 is simple because there are no changes to the IP address(es) or PDU Session. For SSC mode 2, the old charging session will be terminated before the new one is created, and therefore SSC mode 2 has only a capacity impact on the charging. For SSC mode 3, there will be two charging sessions ongoing at the same time, and therefore there will be two reservations for the same service and session seen from a UE perspective. This mean that for SSC mode 3 there is an impact if the UE's account is close to its limit since the network might refuse the setup of the second session even if it should be possible since it's just continuing the previous session.

There is a need to control the SSC mode used from the charging function (CHF), so that at least the SSC mode 3 cannot be used if the UE's account is closed to its limits at the setup of the PDU Session. Embodiments enable the CHF to influence the session management function (SMF) and UE based selection of SSC mode. In embodiments, this may be done by enabling the CHF to: (1) Change the allowed SSC modes in the session management function (SMF) in the response to a Charging Data Request [Initial]; (2) Influence the SSC mode selection policy (SSCMSP) sent to the UE as part of the UE Route Selection Policy (URSP) rule; and (3) Set a trigger if the UE and SMF is going to use SSC mode 3, and then force a disconnection if the UE's account is below a specific limit, in essence changing the SSC mode to 2.

Advantages of the embodiments include optimizing the granting of units and avoiding faulty disconnections due to having to allocate quota to the same PDU Sessions twice.

The invention is defined by the independent claims. Further embodiments of the invention are defined by the dependent claims.

### BRIEF DESCRIPTION OF THE DRAWINGS

The accompanying drawings, which are incorporated herein and form part of the specification, illustrate various embodiments.
FIG. 1 illustrates a system according to an embodiment.
FIG. 2 illustrates a sequence diagram according to an embodiment.
FIG. 3 illustrates a sequence diagram according to an embodiment.
FIG. 4 illustrates a sequence diagram according to some embodiments.
FIG. 5 illustrates a flowchart according to an embodiment.
FIG. 6 illustrates a flowchart according to an embodiment.
FIG. 7 is a block diagram of an apparatus according to an embodiment.

### DETAILED DESCRIPTION

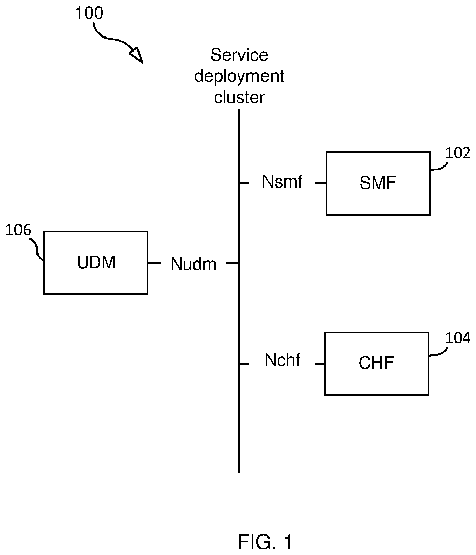

FIG. 1 illustrates a system according to an embodiment. System 100 is part of a network, such as a 5G enabled network. System 100 includes an SMF node 102, a CHF node 104, and a unified data management (UDM) node 106. These nodes may communicate with each other, such as over the links illustrates in FIG. 1 (Nudm, Nsmf, and Nchf). A service deployment cluster may also be connected to the network. A UE (not shown) may interact with system 100.

Depending on the embodiment, CHF 104 will interact with either SMF 102 (embodiments 1 and 3) and UDM 106 (embodiment 2).

### Embodiment 1: Using a new attribute from SMF 102

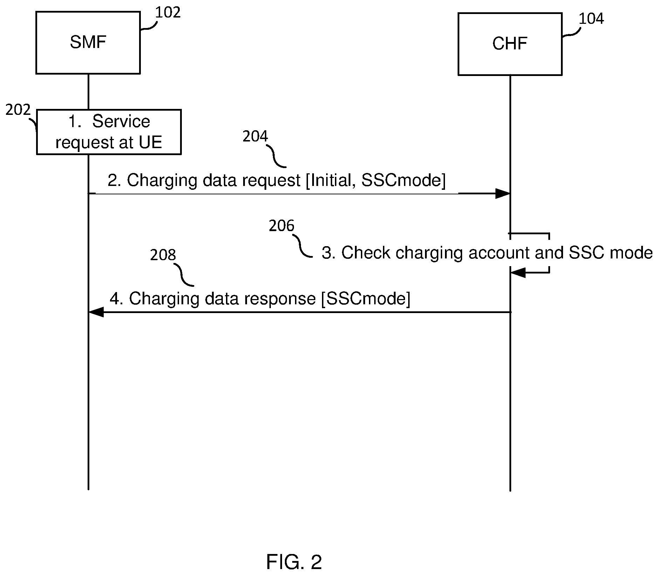

For embodiment 1, there are new attributes provided both in the request and in the response to handle the allowed SSC mode(s). FIG. 2 illustrates a sequence diagram according to this embodiment. As shown, SMF 102 and CHF 104 are in communication.

The following flow is envisioned:
1. At 202, the UE requests service and requests the allowed SSC modes.
2. At 204, The SMF 102 sends an initial charging data request indicating the allowed SSC mode(s).
3. At 206, the CHF 104 evaluates the account associated with the UE and checks if all the SSC modes are possible to use.
4. At 208, the CHF 104 responds with the units granted and an updated list of allowed SSC modes, for example, if there are SSC modes that may not be used for this account.

### Embodiment 2: Updating URSP in UDM

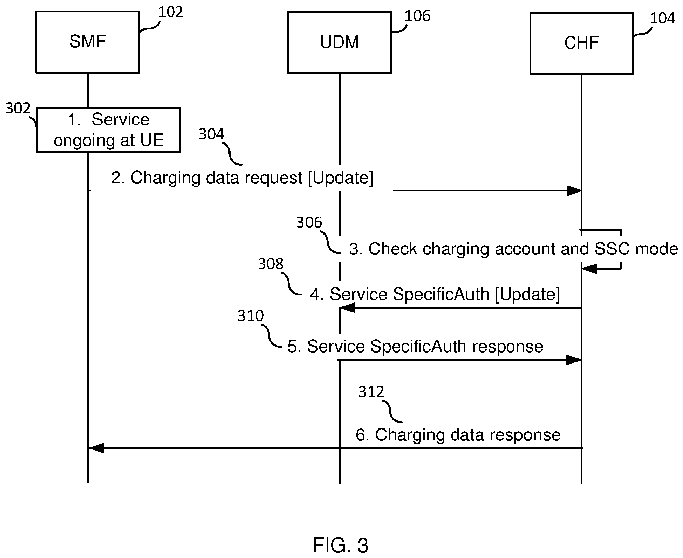

For embodiment 2, there is a new interface between the CHF 104 and UDM 106 to be able to update the URSP, which could be used for other changes as well. FIG. 3 illustrates a sequence diagram according to this embodiment. As shown, SMF 102, CHF 104, and UDM 106 are in communication.

The following flow is envisioned:
1. At 302, the UE uses a service, and the service is ongoing.
2. At 304, the SMF 102 sends a charging data request to update the CHF 104 with the current usage.
3. At 306, the CHF 104 evaluates the account associated with the UE and checks if all the SSC modes are still possible to use.
4. At 308, the CHF 104 sends a request to UDM 106 to update the URSP with the allowed SSC modes for the UE, for example, if there are SSC modes that may not be used for this account.
5. At 310, the UDM 106 responds with a confirmation of the change.
6. At 312, the CHF 104 responds with units granted if any.

### Embodiment 3: New trigger from SMF

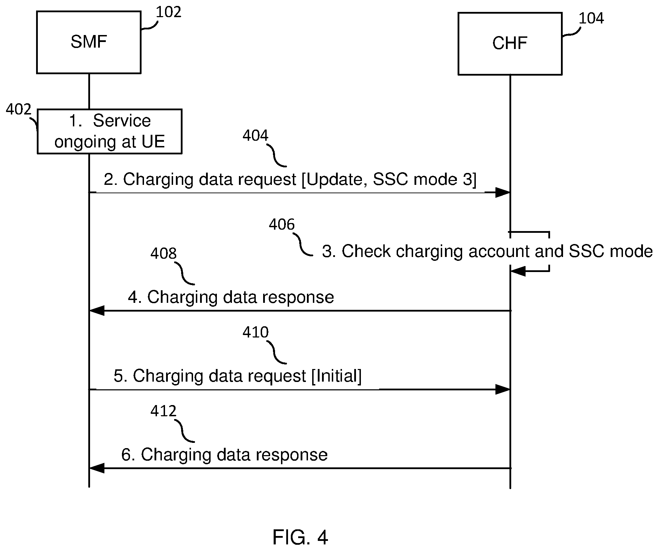

For embodiment 3, there is a new trigger from the SMF 102 to indicate that it will setup a new charging session in parallel for the same service, i.e., using SSC mode 3. FIG. 4 illustrates a sequence diagram according to this embodiment. As shown, SMF 102 and CHF 104 are in communication.

The following flow is envisioned:
1. At 402, the UE uses a service and the service is ongoing.
2. At 404, the SMF 102 sends a charging data request to update the CHF 104 that SSC mode 3 is going to be used to handle session continuity, and that an initial charging data request will be sent for the same service.
3. At 406, the CHF 104 evaluates the account associated with the UE and checks if SSC mode 3 is still possible to use.
4. At 408, the CHF 104 sends a response to SMF 102 to terminate the session if the SSC mode 3 may not be used for this account.
5. At 410, the SMF 102 sends a new initial charging data request for the same service. In embodiments, this may happen at the same time as the step 2 (404).
6. At 412, the CHF 104 responds with units granted, if any.

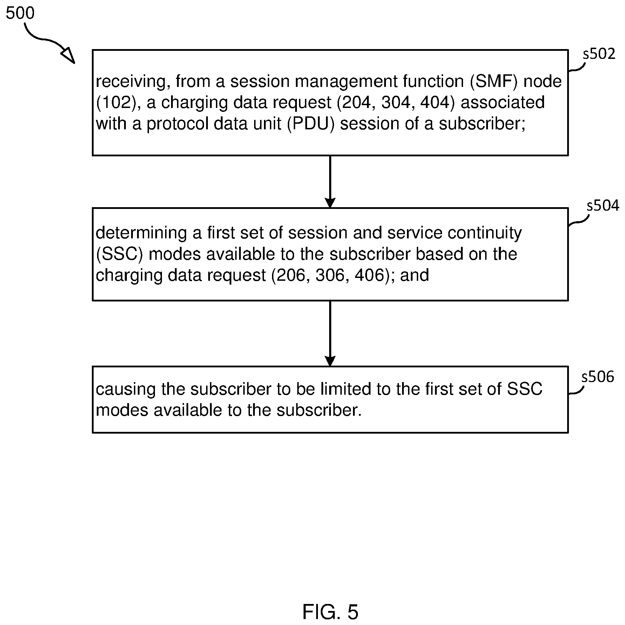

FIG. 5 is a flowchart illustrating a process 500, according to an embodiment, performed by a charging function (CHF) node (104). Process 500 may begin in step s502.

Step s502 comprises receiving, from a session management function (SMF) node (102), a charging data request (204, 304, 404) associated with a protocol data unit (PDU) session of a subscriber.

Step s504 comprises determining a first set of session and service continuity (SSC) modes available to the subscriber based on the charging data request (206, 306, 406).

Step s506 comprises causing the subscriber to be limited to the first set of SSC modes available to the subscriber.

In some embodiments, the charging data request (204) is for initiating a charging session, the charging data request (204) comprises a second set of SSC modes available to the subscriber according to the SMF node, and causing the subscriber to be limited to the first set of SSC modes comprises transmitting towards the SMF node a charging data response (208) comprising the determined SSC modes. In some embodiments, the charging data request (304) is for updating an ongoing charging session, and causing the subscriber to be limited to the first set of SSC modes comprises transmitting towards a unified data management (UDM) node a request (308) to update a user equipment (UE) route selection policy (USRP) comprising the first set of SSC modes. In some embodiments, the method further includes receiving a response (310) from the UDM node confirming the update to the USRP and transmitting towards the SMF (102) node a charging data response (312) in response to receiving a response (310) from the UDM node (106) confirming the update to the USRP. In some embodiments, transmitting towards a UDM node (106) a request (308) to update a USRP is performed in response to a determination that at least one SSC mode is unavailable to the subscriber.

In some embodiments, the charging data request (404) is for updating an ongoing charging session, the charging data request (404) comprises an SSC mode parameter indicating a current SSC mode, and causing the subscriber to be limited to the first set of SSC modes comprises determining that the SSC mode parameter is not in the first set of SSC modes available to the subscriber and as a result, transmitting towards the SMF node (102) a charging data response (408) comprising an indication to terminate the ongoing charging session. In some embodiments, determining a first set of SSC modes available to the subscriber based on the charging data request comprises comparing a balance associated with the subscriber with a threshold value.

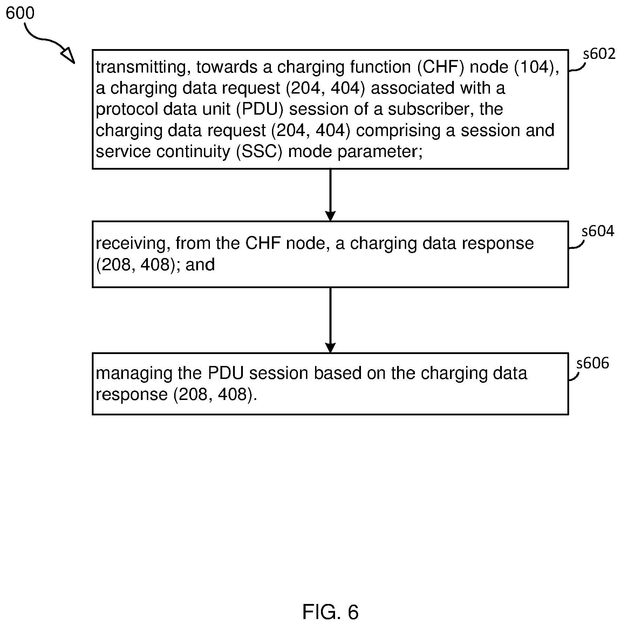

FIG. 6 is a flowchart illustrating a process 600, according to an embodiment, performed by a session management function (SMF) node (102). Process 600 may begin in step s602.

Step 602 comprises transmitting, towards a charging function (CHF) node (104), a charging data request (204, 404) associated with a protocol data unit (PDU) session of a subscriber, the charging data request (204, 404) comprising a session and service continuity (SSC) mode parameter.
Step 602 comprises receiving, from the CHF node, a charging data response (208, 408); and
Step 602 comprises managing the PDU session based on the charging data response (208, 408).

In some embodiments, the charging data request (204) is for initiating a charging session, the SSC mode parameter comprises a first set of SSC modes available to the subscriber according to the SMF node (102), the charging data response (208) comprises a second set of SSC modes available to the subscriber according to the CHF node (104), managing the PDU session based on the charging data response (208) comprises initiating the PDU session if the SSC mode corresponding to the PDU session is in the second set of SSC modes. If the SSC mode corresponding to the PDU session is not in the second set of SSC modes, different alternatives are possible such as rejecting the PDU session or the session may continue without SSC. In some embodiments, the charging data request (404) is for updating an ongoing charging session, the SSC mode parameter comprises the SSC mode associated with the PDU session, the charging data response (408) comprises an indication to terminate the PDU session, and managing the PDU session based on the charging data response (408) comprises terminating the PDU session. In some embodiments, the method further includes, after terminating the PDU session, initiating a new PDU session, transmitting towards the CHF node (104) a new charging data request (410) for initiating a charging session, and receiving from the CHF (104) node a new charging data response (412).

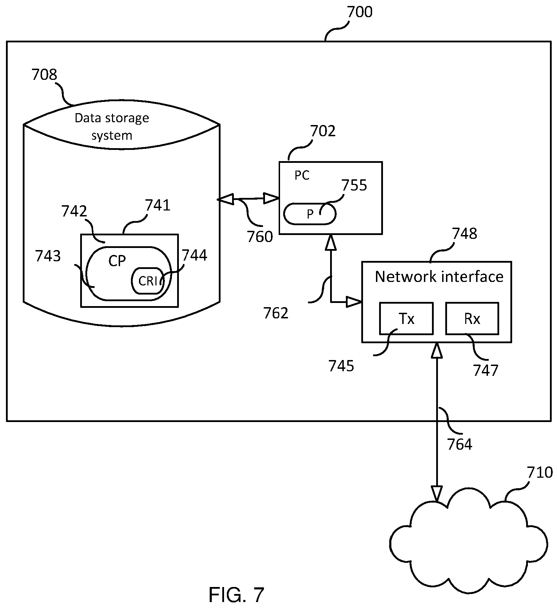

FIG. 7 is a block diagram of apparatus 700 (e.g., SMF 102, CHF 104, UDM 106), according to some embodiments, for performing the methods disclosed herein. As shown in FIG. 7, apparatus 700 may comprise: processing circuitry (PC) 702, which may include one or more processors (P) 755 (e.g., a general purpose microprocessor and/or one or more other processors, such as an application specific integrated circuit (ASIC), field-programmable gate arrays (FPGAs), and the like), which processors may be co-located in a single housing or in a single data center or may be geographically distributed (i.e., apparatus 700 may be a distributed computing apparatus); at least one network interface 748 comprising a transmitter (Tx) 745 and a receiver (Rx) 747 for enabling apparatus 700 to transmit data to and receive data from other nodes connected to a network 710 (e.g., an Internet Protocol (IP) network) to which network interface 748 is connected (directly or indirectly) (e.g., network interface 748 may be wirelessly connected to the network 710, in which case network interface 748 is connected to an antenna arrangement); and a storage unit (a.k.a., "data storage system") 708, which may include one or more non-volatile storage devices and/or one or more volatile storage devices. Interface 760 may connect PC 702 and storage unit 708, interface 762 may connect PC 702 and network interface 748, and interface 764 may connect network interface 748 and network 710. In embodiments where PC 702 includes a programmable processor, a computer program product (CPP) 741 may be provided. CPP 741 includes a computer readable medium (CRM) 742 storing a computer program (CP) 743 comprising computer readable instructions (CRI) 744. CRM 742 may be a non-transitory computer readable medium, such as, magnetic media (e.g., a hard disk), optical media, memory devices (e.g., random access memory, flash memory), and the like. In some embodiments, the CRI 744 of computer program 743 is configured such that when executed by PC 702, the CRI causes apparatus 700 to perform steps described herein (e.g., steps described herein with reference to the flow charts). In other embodiments, apparatus 700 may be configured to perform steps described herein without the need for code. That is, for example, PC 702 may consist merely of one or more ASICs. Hence, the features of the embodiments described herein may be implemented in hardware and/or software.

While various embodiments are described herein, it should be understood that they have been presented by way of example only, and not limitation. Thus, the breadth and scope of this disclosure should not be limited by any of the above described exemplary embodiments. Moreover, any combination of the above-described embodiments in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method performed by a charging function (CHF) node (104), the method comprising:
receiving, from a session management function (SMF) node (102), a charging data request (204, 304, 404) associated with a protocol data unit (PDU) session of a subscriber;
the method being **characterized by** :
determining a first set of session and service continuity (SSC) modes available to the subscriber based on the charging data request (206, 306, 406); and
causing the subscriber to be limited to the first set of SSC modes available to the subscriber.

2. The method of claim 1, wherein the charging data request (204) is for initiating a charging session, the charging data request (204) comprises a second set of SSC modes available to the subscriber according to the SMF node, and causing the subscriber to be limited to the first set of SSC modes comprises transmitting towards the SMF node a charging data response (208) comprising the determined SSC modes.

3. A charging function (CHF) node (104) comprising:
processing circuitry (702); and
a memory, the memory containing instructions (744) executable by the processing circuitry (702), whereby when executed the processing circuitry (702) is configured to:
receive, from a session management function (SMF) node (102), a charging data request (204, 304, 404) associated with a protocol data unit (PDU) session of a subscriber;
the CHF node being **characterized in that** the processing circuitry is further configured to :
determine a first set of session and service continuity (SSC) modes available to the subscriber based on the charging data request (206, 306, 406); and
cause the subscriber to be limited to the first set of SSC modes available to the subscriber.

4. The CHF node of claim 3, wherein the charging data request (204) is for initiating a charging session, the charging data request (204) comprises a second set of SSC modes available to the subscriber according to the SMF node, and causing the subscriber to be limited to the first set of SSC modes comprises transmitting towards the SMF node a charging data response (208) comprising the determined SSC modes.

5. The CHF node of claim 3, wherein the charging data request (304) is for updating an ongoing charging session, and causing the subscriber to be limited to the first set of SSC modes comprises transmitting towards a unified data management (UDM) node a request (308) to update a user equipment (UE) route selection policy (USRP) comprising the first set of SSC modes.

6. The CHF node of claim 5, wherein when executed the processing circuitry (702) is further configured to receive a response (310) from the UDM node confirming the update to the USRP and transmitting towards the SMF (102) node a charging data response (312) in response to receiving a response (310) from the UDM node (106) confirming the update to the USRP.

7. The CHF node of any one of claims 5-6, wherein transmitting towards a UDM node (106) a request (308) to update a USRP is performed in response to a determination that at least one SSC mode is unavailable to the subscriber.

8. The CHF node of claim 3, wherein the charging data request (404) is for updating an ongoing charging session, the charging data request (404) comprises an SSC mode parameter indicating a current SSC mode, and causing the subscriber to be limited to the first set of SSC modes comprises determining that the SSC mode parameter is not in the first set of SSC modes available to the subscriber and as a result, transmitting towards the SMF node (102) a charging data response (408) comprising an indication that the SSC mode parameter is not in the first set of SSC modes available to the subscriber.

9. The CHF node of claim 8, wherein the indication that the SSC mode parameter is not in the first set of SSC modes available to the subscriber comprises an indication to terminate the ongoing charging session.

10. The CHF node of any one of claims 3-9, wherein determining a first set of SSC modes available to the subscriber based on the charging data request comprises comparing a balance associated with the subscriber with a threshold value.

11. A computer program (743) comprising instructions which when executed by processing circuitry (702) of a node (700), causes the node (700) to perform the method of any one of claims 1-2.

12. A carrier containing the computer program (743) of claim 11, wherein the carrier is one of an electronic signal, an optical signal, a radio signal, and a computer readable storage medium (742).

## Patentansprüche

1. Verfahren, das von einem Knoten (104) mit Abrechnungsfunktion (CHF) durchgeführt wird, wobei das Verfahren Folgendes umfasst:
Empfangen einer Abrechnungsdatenanforderung (204, 304, 404), die mit einer Protokolldateneinheitssitzung (PDU-Sitzung) eines Teilnehmers assoziiert ist, von einem Knoten (102) mit Sitzungsverwaltungsfunktion (SMF);
wobei das Verfahren **gekennzeichnet ist durch**:
Bestimmen eines ersten Satzes von Sitzungs- und Dienstkontinuitätsmodi (SSC-Modi), die für den Teilnehmer verfügbar sind, basierend auf der Abrechnungsdatenanforderung (206, 306, 406);
Veranlassen, dass der Teilnehmer auf den ersten Satz von SSC-Modi beschränkt wird, die für den Teilnehmer verfügbar sind.

2. Verfahren nach Anspruch 1, wobei die Abrechnungsdatenanforderung (204) zum Initiieren einer Abrechnungssitzung ist, wobei die Abrechnungsdatenanforderung (204) einen zweiten Satz von SSC-Modi umfasst, die gemäß dem SMF-Knoten für den Teilnehmer verfügbar sind, und das Veranlassen, dass der Teilnehmer auf den ersten Satz von SSC-Modi beschränkt wird, Senden einer Abrechnungsdatenantwort (208), die die bestimmten SSC-Modi umfasst, an den SMF-Knoten umfasst.

3. Knoten (104) mit Abrechnungsfunktion (CHF), umfassend:
Verarbeitungsschaltungsanordnung (702); und
einen Speicher, wobei der Speicher Anweisungen (744) enthält, die von der Verarbeitungsschaltungsanordnung (702) ausgeführt werden können, wodurch bei Ausführung die Verarbeitungsschaltungsanordnung (702) zu Folgendem konfiguriert ist:
Empfangen einer Abrechnungsdatenanforderung (204, 304, 404), die mit einer Protokolldateneinheitssitzung (PDU-Sitzung) eines Teilnehmers assoziiert ist, von einem Knoten (102) mit Sitzungsverwaltungsfunktion (SMF);
wobei CHF-Knoten **dadurch gekennzeichnet ist, dass** die Verarbeitungsschaltungsanordnung ferner zu Folgendem konfiguriert ist:
Bestimmen eines ersten Satzes von Sitzungs- und Dienstkontinuitätsmodi (SSC-Modi), die für den Teilnehmer verfügbar sind, basierend auf der Abrechnungsdatenanforderung (206, 306, 406);
Veranlassen, dass der Teilnehmer auf den ersten Satz von SSC-Modi beschränkt wird, die für den Teilnehmer verfügbar sind.

4. CHF-Knoten nach Anspruch 3, wobei die Abrechnungsdatenanforderung (204) zum Initiieren einer Abrechnungssitzung ist, die Abrechnungsdatenanforderung (204) einen zweiten Satz von SSC-Modi umfasst, die gemäß dem SMF-Knoten für den Teilnehmer verfügbar sind, und das Veranlassen, dass der Teilnehmer auf den ersten Satz von SSC-Modi beschränkt wird, Senden einer Abrechnungsdatenantwort (208), die die bestimmten SSC-Modi umfasst, an den SMF-Knoten umfasst.

5. CHF-Knoten nach Anspruch 3, wobei die Abrechnungsdatenanforderung (304) zum Aktualisieren einer laufenden Abrechnungssitzung ist und das Veranlassen, dass der Teilnehmer auf den ersten Satz von SSC-Modi beschränkt wird, Senden einer Anforderung (308) zum Aktualisieren einer Routenauswahlrichtlinie (USRP) für eine Benutzereinrichtung (UE), die den ersten Satz von SSC-Modi umfasst, an einen Knoten zur einheitlichen Datenverwaltung (UDM) umfasst.

6. CHF-Knoten nach Anspruch 5, wobei bei Ausführung die Verarbeitungsschaltungsanordnung (702) ferner dazu konfiguriert ist, eine Antwort (310) von dem UDM-Knoten zu empfangen, die die Aktualisierung der USRP bestätigt, und in Reaktion auf den Empfang einer Antwort (310) von dem UDM-Knoten (106), die die Aktualisierung der USRP bestätigt, eine Abrechnungsdatenantwort (312) an den SMF-Knoten (102) zu senden.

7. CHF-Knoten nach einem der Ansprüche 5-6, wobei das Senden einer Anforderung (308) zum Aktualisieren einer USRP an den UDM-Knoten (106) in Reaktion auf eine Bestimmung durchgeführt wird, dass mindestens ein SSC-Modus für den Teilnehmer nicht verfügbar ist.

8. CHF-Knoten nach Anspruch 3, wobei die Abrechnungsdatenanforderung (404) zum Aktualisieren einer laufenden Abrechnungssitzung ist, wobei die Abrechnungsdatenanforderung (404) einen SSC-Modus-Parameter umfasst, der einen aktuellen SSC-Modus angibt, und das Veranlassen, dass der Teilnehmer auf den ersten Satz von SSC-Modi beschränkt wird, Bestimmen umfasst, dass der SSC-Modus-Paramater nicht im ersten Satz von SSC-Modi ist, die für den Teilnehmer verfügbar sind, und als Ergebnis Senden einer Abrechnungsdatenantwort (408) an den SMF-Knoten (102), die eine Angabe umfasst, dass der SSC-Modus-Parameter nicht in dem ersten Satz von SSC-Modi ist, die für den Teilnehmer verfügbar sind.

9. CHF-Knoten nach Anspruch 8, wobei die Angabe, dass der SSC-Modus-Parameter nicht in dem ersten Satz von SSC-Modi ist, die für den Teilnehmer verfügbar sind, eine Angabe umfasst, die laufende Abrechnungssitzung zu beenden.

10. CHF-Knoten nach einem der Ansprüche 3-9, wobei das Bestimmen eines ersten Satzes von SSC-Modi, die für den Teilnehmer verfügbar sind, basierend auf der Abrechnungsdatenanforderung Vergleichen eines mit dem Teilnehmer assoziierten Guthabens mit einem Schwellenwert umfasst.

11. Computerprogramm (743), umfassend Anweisungen, die bei Ausführung durch Verarbeitungsschaltungsanordnung (702) eines Knotens (700) den Knoten (700) zum Durchführen des Verfahrens nach einem der Ansprüche 1-2 veranlassen.

12. Datenträger, der das Computerprogramm (743) nach Anspruch 11 enthält, wobei der Datenträger eines von einem elektronischen Signal, einem optischen Signal, einem Funksignal und einem computerlesbaren Speichermedium (742) ist.

## Revendications

1. Procédé réalisé par un nœud de fonction de facturation (CHF) (104), le procédé comprenant :
la réception, depuis un nœud de fonction de gestion de session (SMF) (102), d'une demande de données de facturation (204, 304, 404) associée à une session d'unité de données de protocole (PDU) d'un abonné ;
le procédé étant **caractérisé par** :
la détermination d'un premier ensemble de modes de continuité de session et de service (SSC) disponibles pour l'abonné sur la base de la demande de données de facturation (206, 306, 406) ; et
le fait d'amener l'abonné à être limité au premier ensemble de modes SSC disponibles pour l'abonné.

2. Procédé selon la revendication 1, dans lequel la demande de données de facturation (204) est pour initier une session de facturation, la demande de données de facturation (204) comprend un deuxième ensemble de modes SSC disponibles pour l'abonné en fonction du nœud SMF, et le fait d'amener l'abonné à être limité au premier ensemble de modes SSC comprend la transmission, vers le nœud SMF, d'une réponse de données de facturation (208) comprenant les modes SSC déterminés.

3. Nœud de fonction de facturation (CHF) (104), comprenant :
une circuiterie de traitement (702) ; et
une mémoire, la mémoire contenant des instructions (744) exécutables par la circuiterie de traitement (702), selon lesquelles, lorsqu'elles sont exécutées, la circuiterie de traitement (702) est configurée pour :
recevoir, depuis un nœud de fonction de gestion de session (SMF) (102), une demande de données de facturation (204, 304, 404) associée à une session d'unité de données de protocole (PDU) d'un abonné ;
le nœud CHF étant **caractérisé en ce que** la circuiterie de traitement est en outre configurée pour :
déterminer un premier ensemble de modes de continuité de session et de service (SSC) disponibles pour l'abonné sur la base de la demande de données de facturation (206, 306, 406) ; et
amener l'abonné à être limité au premier ensemble de modes SSC disponibles pour l'abonné.

4. Nœud CHF selon la revendication 3, dans lequel la demande de données de facturation (204) est pour initier une session de facturation, la demande de données de facturation (204) comprend un deuxième ensemble de modes SSC disponibles pour l'abonné en fonction du nœud SMF, et le fait d'amener l'abonné à être limité au premier ensemble de modes SSC comprend la transmission, vers le nœud SMF, d'une réponse de données de facturation (208) comprenant les modes SSC déterminés.

5. Nœud CHF selon la revendication 3, dans lequel la demande de données de facturation (304) est pour mettre à jour une session de facturation en cours, et le fait d'amener l'abonné à être limité au premier ensemble de modes SSC comprend la transmission, vers un nœud de gestion unifiée de données (UDM), d'une demande (308) pour mettre à jour une politique de sélection d'itinéraire d'équipement utilisateur (UE) (USRP) comprenant le premier ensemble de modes SSC.

6. Nœud CHF selon la revendication 5, dans lequel, lorsque les instructions sont exécutées, la circuiterie de traitement (702) est en outre configurée pour recevoir une réponse (310) depuis le nœud UDM confirmant la mise à jour à l'USRP et transmettant, vers le nœud SMF (102), une réponse de données de facturation (312) en réponse à la réception d'une réponse (310), depuis le nœud UDM (106), confirmant la mise à jour à l'USRP.

7. Nœud CHF selon l'une quelconque des revendications 5 et 6, dans lequel la transmission, vers un nœud UDM (106), d'une demande (308) pour mettre à jour un USRP est réalisée en réponse à une détermination qu'au moins un mode SSC est indisponible pour l'abonné.

8. Nœud CHF selon la revendication 3, dans lequel la demande de données de facturation (404) est pour mettre à jour une session de facturation en cours, la demande de données de facturation (404) comprend un paramètre de mode SSC indiquant un mode SSC courant, et le fait d'amener l'abonné à être limité au premier ensemble de modes SSC comprend la détermination que le paramètre de mode SSC n'est pas dans le premier ensemble de modes SSC disponibles pour l'abonné et, en conséquence, la transmission, vers le nœud SMF (102), d'une réponse de données de facturation (408) comprenant une indication que le paramètre de mode SSC n'est pas dans le premier ensemble de modes SSC disponibles pour l'abonné.

9. Nœud CHF selon la revendication 8, dans lequel l'indication que le paramètre de mode SSC n'est pas dans le premier ensemble de modes SSC disponibles pour l'abonné comprend une indication de terminer la session de facturation en cours.

10. Nœud CHF selon l'une quelconque des revendications 3 à 9, dans lequel la détermination d'un premier ensemble de modes SSC disponibles pour l'abonné sur la base de la demande de données de facturation comprend la comparaison d'un solde associé à l'abonné à une valeur seuil.

11. Programme informatique (743) comprenant des instructions qui, lorsqu'elles sont exécutées par une circuiterie de traitement (702) d'un nœud (700), amènent le nœud (700) à réaliser le procédé selon l'une quelconque des revendications 1 et 2.

12. Support contenant le programme informatique (743) selon la revendication 11, dans lequel le support est l'un parmi un signal électronique, un signal optique, un signal radio et un support de stockage lisible par ordinateur (742).
